# EUROPEAN PATENT SPECIFICATION

(11) **EP 2 975 828 B1**
(45) Date of publication and mention of the grant of the patent: **16.10.2019**
(21) Application number: 14177740.9
(22) Date of filing: 18.07.2014
(51) Int. Cl.: H04L 29/12

(54) **Method for configuring a network connection, telecommunications network, program and computer program product**
Verfahren zur Konfiguration einer Netzwerksverbindung, Telekommunikationsnetzwerk, Programm und Programmprodukt
Procédé de configuration d'une connexion réseau, réseau de communication, programme ordinateur et produit programme ordinateur.

(43) Date of publication of application: 20.01.2016
(73) Proprietor: Deutsche Telekom AG, 53113 Bonn (DE)
(72) Inventor: Schatzmayr, Rainer, 53229 Bonn (DE)
(74) Representative: Schwöbel, Thilo K.

(56) References cited:
- PATRICK MOTOROLA BCS M: "DHCP Relay Agent Information Option; rfc3046.txt", 20010101, 1 January 2001 (2001-01-01), XP015008829, ISSN: 0000-0003
- DROMS BUCKNELL UNIVERSITY R: "Dynamic Host Configuration Protocol; rfc2131.txt", 19970301, 1 March 1997 (1997-03-01), XP015007915, ISSN: 0000-0003
- DROMS R ET AL: "Dynamic Host Configuration Protocol for IPv6 (DHCPv6); rfc3315.txt", 20030701, 1 July 2003 (2003-07-01), XP015009185, ISSN: 0000-0003

## Description

### BACKGROUND

The present invention relates a method for configuring a network connection between a client and a telecommunications network. The present invention further relates to a telecommunications network for configuring a network connection between a client and the telecommunications network.

The Dynamic Host Configuration Protocol (DHCP) is a client-server protocol used on Internet Protocol (IP) networks for dynamically distributing network configuration parameters, such as Internet Protocol (IP) addresses. Typically, a Dynamic Host Configuration Protocol (DHCP) client (being located at a customer's premises) requests at a Dynamic Host Configuration Protocol (DHCP) server (being located at the operator's network) for an Internet Protocol (IP) address. The Dynamic Host Configuration Protocol (DHCP) server typically manages a set of Internet Protocol (IP) addresses (IP address pool) one of which is allocated to the Dynamic Host Configuration Protocol (DHCP) client and sent to the client using a Dynamic Host Configuration Protocol (DHCP) Internet Protocol (IP) address offer-message. Typically, a rotating mechanism is used by the Dynamic Host Configuration Protocol (DHCP) server to realize an Internet Protocol (IP) address privacy scheme such that another Internet Protocol (IP) address is allocated to the Dynamic Host Configuration Protocol (DHCP) client upon each Dynamic Host Configuration Protocol (DHCP) request. However, the Internet Protocol (IP) address privacy scheme typically requires a relatively large amount of data to be stored (for example in a static profile configuration file) and/or exchanged between the Dynamic Host Configuration Protocol (DHCP) servers.

Moreover, when relatively large deployments are used (i.e. when a plurality of Dynamic Host Configuration Protocol (DHCP) servers and/or clients are used), the Dynamic Host Configuration Protocol (DHCP) client does not communicate directly to the Dynamic Host Configuration Protocol (DHCP) server, but rather uses a Dynamic Host Configuration Protocol (DHCP) relay agent to communicate with the Dynamic Host Configuration Protocol (DHCP) servers. The Dynamic Host Configuration Protocol (DHCP) relay agent is usually located at an edge router of the telecommunications network and is configured to receive all Dynamic Host Configuration Protocol (DHCP) requests from the Dynamic Host Configuration Protocol (DHCP) client. Upon reception of a Dynamic Host Configuration Protocol (DHCP) request from a client, the relay agent relays the request to the Dynamic Host Configuration Protocol (DHCP) server and returns the responses from the Dynamic Host Configuration Protocol (DHCP) server to the corresponding Dynamic Host Configuration Protocol (DHCP) client.

Within the context of Cloud (distributed) Computing, there is a limitation in current network designs, wherein a persistent storage for Internet Protocol (IP) address pools is required to realize a stateful Dynamic Host Configuration Protocol (DHCP) protocol. Typically, the Dynamic Host Configuration Protocol (DHCP) server stores information about which Internet Protocol (IP) address has been allocated to a customer, and which Internet Protocol (IP) addresses are still available in the Internet Protocol (IP) address pool. This might lead to situations - especially in case that a plurality of Dynamic Host Configuration Protocol (DHCP) servers are used - in which the Internet Protocol (IP) address pools are partitioned among the Dynamic Host Configuration Protocol (DHCP) servers such that the system does not scale - especially when more than ten or hundreds of Dynamic Host Configuration Protocol (DHCP) servers are used. Alternatively, the plurality of Dynamic Host Configuration Protocol (DHCP) servers may require a persistent distributed storage that has performance limitations and which is usually relatively complicated to operate. M. Patrick, Motorola BCS: "DHCP Relay Agent Information Option", RFC 3046, January 2001, XP 015008829, reveals a DHCP option, which is called Relay Agent Information option and is inserted by the DHCP relay agent when forwarding client-originated DHCP packets to a DHCP server.

### SUMMARY

An object of the present invention is to provide technically efficient and cost effective solution for enhancing the use of Internet Protocol (IP) privacy in telecommunications network, especially when a plurality of Dynamic Host Configuration Protocol (DHCP) servers are used for the allocation of Internet Protocol (IP) addresses.

The invention is defined by the subject-matter of the independent claims.

The description is given for the sake of example only, without limiting the scope of the invention. The reference figures quoted below refer to the attached drawings.

### BRIEF DESCRIPTION OF THE DRAWINGS

Figure 1 schematically illustrates a telecommunications network according to the present invention.
Figure 2 schematically illustrates a communication diagram according to the present invention.

### DETAILED DESCRIPTION

The present invention will be described with respect to particular embodiments and with reference to certain drawings but the invention is not limited thereto but only by the claims. The drawings described are only schematic and are nonlimiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

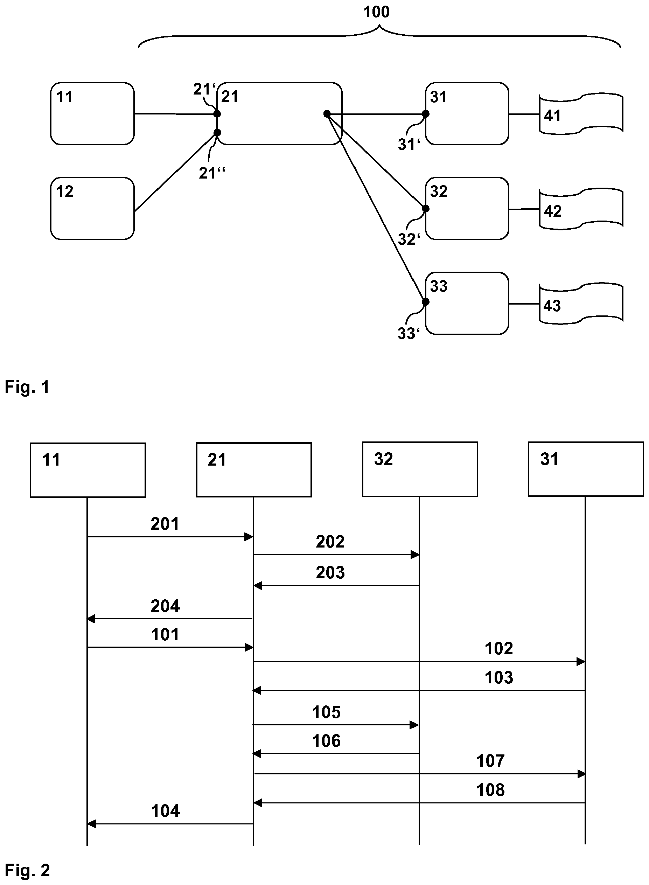

In Figure 1, a telecommunications network 100 according to an embodiment of the present invention is illustrated schematically. The telecommunications network 100 is adapted to configure a network connection between a client 11 and the telecommunications network 100 and preferably adapted to configure a further network connection between a further client 12 and the telecommunications network 100. The telecommunications network 100 comprises a router 21 having an interface 21' and preferably a further interface 21". The client 11 is connected to the interface 21' of the router 21 and the further client 12 is preferably connected to the further interface 21" of the router 21. The router 21 comprises identification data for identification of the interface 21' and preferably further identification data for identification of the further interface 21". It is preferred according to the present invention that the identification data include an Internet Protocol (IP) address (preferably according to IP version 6 or higher) - which is herein called interface Internet Protocol (IP) address. Preferably, the interface Internet Protocol (IP) address is allocated, by the telecommunications network 100, to the interface 21' of the router 21. It is further preferred according to the present invention that the further identification data include a further Internet Protocol (IP) address (preferably according to IP version 6 or higher) - which is herein called further interface Internet Protocol (IP) address. Preferably, the further interface Internet Protocol (IP) address is allocated, by the telecommunications network 100, to the further interface 21" of the router 21.

The telecommunications network additionally comprises at least one Dynamic Host Configuration Protocol (DHCP) server 31, 32, 33, wherein a Dynamic Host Configuration Protocol (DHCP) server 31, a further Dynamic Host Configuration Protocol (DHCP) server 32 and a still further Dynamic Host Configuration Protocol (DHCP) server 33 are shown. It is preferred according to the present invention that the router 21 is configured to communicate with the at least one Dynamic Host Configuration Protocol (DHCP) server 31, 32, 33 using Internet Protocol version 6 or higher (IPv6) anycast. This means, in particular, that the router 21 is connected to at least one server interface 31', 32', 33' of the at least one Dynamic Host Configuration Protocol (DHCP) server 31, 32, 33, wherein the same server Internet Protocol version 6 or higher (IPv6) address is allocated, by the telecommunications network 100, to each of the at least one server interface 31', 32', 33'.

It is preferred according to the present invention that each of the at least one Dynamic Host Configuration Protocol (DHCP) server 31, 32, 33 comprises a profile data storage 41, 42, 43. Preferably, the profile data storages 41, 42, 43 are used to store profile data related to a user of the client 11 and preferably further profile data related to a further user of the further client 12, wherein the profile data comprises the interface identification data, wherein the further profile data preferably comprise the further interface identification data.

According to the present invention, the network connection between the client 11 and the telecommunications network 100 is preferably configured by assigning an Internet Protocol (IP) address for realizing an Internet Protocol (IP) session or (logical) connection via the (physical) network connection.

In Figure 2, a communication diagram is shown to illustrate an embodiment of the inventive method. Here, the configuration of the network connection between a Dynamic Host Configuration Protocol (DHCP) client 11 and the telecommunications network 100 is illustrated, wherein the router 21 hosts a Dynamic Host Configuration Protocol (DHCP) relay agent (which is herein also called relay agent of the router 21).

Figure 2 shows that a discovery procedure is used to locate the at least one Dynamic Host Configuration Protocol (DHCP) server 31, 32, 33 by means of transmitting a solicit-message 201 from the client 11 to the relay agent of the router 21. Here, the discovery of the further Dynamic Host Configuration Protocol (DHCP) server 32 is illustrated, wherein the relay agent of the router 21 transmits a solicit-relay message 202 to the further Dynamic Host Configuration Protocol (DHCP) server 32. The further Dynamic Host Configuration Protocol (DHCP) server 32 replies to the relay agent of the router 21 by transmitting a solicit-offer message 203. Subsequently, the relay agent of the router 21 transmits an offer-message 204 to the client 11.

In a first step of the method according to the present invention, a first message 101 is transmitted from the client 11 to the relay agent of the router 21, wherein the first message 101 is transmitted via the interface 21' of the router 21. The first message 101 is related to a request for the Internet Protocol (IP) address for realizing an Internet Protocol (IP) session or connection between the client 11 and the telecommunications network 100. Here, the Dynamic Host Configuration Protocol (DHCP) client 11 sends a request (i.e. the first message 101) to an interface Internet Protocol (IP) address of the (physical) interface 21' of the router 21 (to which the Dynamic Host Configuration Protocol (DHCP) client 11 is connected to). Preferably, the interface Internet Protocol (IP) address is configured by the telecommunications network 100 such that the interface Internet Protocol (IP) address is unique in the telecommunications network 100 and/or such that all other interface Internet Protocol (IP) addresses of the router 21 (e.g. a further interface IP address being related to a further interface 21" of the router 21 to which a further client 12 is connected to) are part of a set of IP addresses (IP address block) that can be traced back to the router 21 (i.e. a set of dedicated IP addresses being uniquely assigned to the router 21).

In a second step of the method according to the present invention, a second message 102 is transmitted from the relay agent of the router 21 to the Dynamic Host Configuration Protocol (DHCP) server 31, wherein interface identification data are included in the second message 102, wherein the interface identification data are related to an identification of the interface 21' of the router 21 being used for the transmission of the first message 101 The interface identification data comprises at least the interface Internet Protocol (IP) address of the interface 21' of the router 21. In particular, the Dynamic Host Configuration Protocol (DHCP) relay agent on the router 21 relays the first message 101 received on the interface 21' to the Dynamic Host Configuration Protocol (DHCP) server 31, wherein the interface Internet Protocol (IP) address of the interface 21' of the router 21 is included in the second message 102. Preferably, the Dynamic Host Configuration Protocol (DHCP) server 31 is selected from the at least one DHCP server 31, 32, 33 by at least one algorithm out of a hash on the first Internet Protocol (IP) address, a round-robin algorithm and a lowest routing metric algorithm.

In a third step of the method according to the present invention, the Dynamic Host Configuration Protocol (DHCP) server 31 obtains an Internet Protocol (IP) address (which is herein also called response IP address) for realizing the Internet Protocol (IP) session or connection between the client 11 and the telecommunications network 100, wherein the response Internet Protocol (IP) address is obtained in dependence of the interface identification data included in the second message 102. This means, in particular, that the Dynamic Host Configuration Protocol (DHCP) server 31 uses the interface Internet Protocol (IP) address of the interface 21' of the router 21 and a profile configuration policy (i.e. by using profile data related to a user of the client 11) to determine the response Internet Protocol (IP) address to be sent in response to the first request message 101 sent by the client 11. If the profile configuration policy for the interface Internet Protocol (IP) address of the interface 21' of the router 21 is "dynamic address", the response Internet Protocol (IP) address is randomly determined from a special pool of Internet Protocol addresses (i.e. the set of Internet Protocol addresses being dedicated to the router 21). If the profile configuration policy is "static", the response Internet Protocol address is generated based on the interface Internet Protocol (IP) address or read from the profile data.

In a fourth step of the method according to the present invention, a third message 103 is transmitted from the Dynamic Host Configuration Protocol (DHCP) server 31 to the relay agent of the router 21, wherein the third message 103 comprises the response Internet Protocol (IP) address and preferably the interface Internet Protocol (IP) address of the interface 21' of the router 21.

In a fifth step of the method according to the present invention, the relay agent of the router 21 checks, if the response Internet Protocol (IP) address is allocated to another interface (e.g. the further interface 21") of the router 21 being different from the interface 21' of the router 21.

Preferably, a fourteenth step according to the present invention is carried out in case that the router 21 detects - in the fifth step - that the response Internet Protocol (IP) address is available for realizing the Internet Protocol (IP) session or connection between the client 11 and the telecommunications network 100. Alternatively, in a sixth step of the method according to the present invention - in case that the response Internet Protocol (IP) address is allocated to another interface 21" of the router 21 - the relay agent of the router 21 sends a fifth message 105 (reject message) with the rejected response Internet Protocol (IP) address to one of the at least one Dynamic Host Configuration Protocol (DHCP) server 31, 32, 33 - here to the further Dynamic Host Configuration Protocol (DHCP) server 32.

In a seventh step of the method according to the present invention, the further Dynamic Host Configuration Protocol (DHCP) server 32 uses the rejected response Internet Protocol (IP) address and the profile data related to the user of the client 11 to determine a new response Internet Protocol (IP) address according to the third step.

In an eighth step of the method according to the present invention, the further Dynamic Host Configuration Protocol (DHCP) server 32 sends a sixth message 106 (response) to the relay agent of the router 21, wherein the sixth message 106 includes the new response Internet Protocol (IP) address and preferably the interface Internet Protocol (IP) address of the interface 21' of the router 21.

In a ninth step of the method according to the present invention, the relay agent of the router 21 checks, if the new response Internet Protocol (IP) address is allocated to another interface 21" of the router 21, in particular according to the fifth step.

In a tenth step of the method according to the present invention - in case that the new response Internet Protocol (IP) address is allocated - the relay agent of the router 21 sends a seventh message 107 (further reject message) to one of the at least one Dynamic Host Configuration Protocol (DHCP) server 31, 32, 33. The at least one Dynamic Host Configuration Protocol (DHCP) server 31, 32, 33 may be the same or a different one - wherein here the seventh message 107 is transmitted to the Dynamic Host Configuration Protocol (DHCP) server 31.

In an eleventh step of the method according to the present invention, the Dynamic Host Configuration Protocol (DHCP) server 31 uses the rejected new response Internet Protocol (IP) address and the profile data related to the user of the client 11 to determine a further new response Internet Protocol (IP) address, in particular according to the third step.

In a twelfth step of the method according to the present invention, the Dynamic Host Configuration Protocol (DHCP) server 31 sends an eighth message 108 to the relay agent of the router 21, wherein the eighth message 108 includes the further new response Internet Protocol (IP) address and preferably the interface Internet Protocol (IP) address of the interface 21' of the router 21.

In a thirteenth step of the method according to the present invention, the relay agent of the router 21 checks, if the further new response Internet Protocol (IP) address is allocated, wherein the tenth step of the method is carried out, in case the further new response Internet Protocol (IP) address is allocated, wherein a fourteenth step is carried out, in case the further new response Internet Protocol (IP) address is not allocated to a different interface 21" of the router 21.

In the fourteenth step of the method according to the present invention, a fourth message 104 is transmitted from the router 21 to the client 11, if the router 21 detects that the Internet Protocol (IP) address is available for realizing the Internet Protocol (IP) session or connection between the client 11 and the telecommunications network 100, wherein the fourth message 104 comprises the (further new) response Internet Protocol (IP) address.

## Claims

1. Method for configuring a network connection between a client (11) and a telecommunications network (100), wherein the telecommunications network (100) comprises a router (21) having an interface (21') and a Dynamic Host Configuration Protocol server (31), wherein the client (11) is connected to the telecommunications network (100) via the interface (21') of the router (21), wherein the method comprises the steps of:
-- transmitting a first message (101), via the interface (21') of the router (21), from the client (11) to the router (21), wherein the first message (101) is related to a request for an Internet Protocol address assignment for realizing an Internet Protocol session or connection between the client (11) and the telecommunications network (100),
-- transmitting a second message (102) from the router (21) to the Dynamic Host Configuration Protocol server (31), wherein the router (21) relays the first message (101) to the Dynamic Host Configuration Protocol server (31), wherein the second message (102) comprises interface identification data, wherein the interface identification data are related to an identification of the interface (21') of the router (21) being used for the transmission of the first message (101), wherein the interface identification data comprise at least an interface Internet Protocol address of the interface (21'),
-- obtaining, by the Dynamic Host Configuration Protocol server (31), an Internet Protocol address for realizing the Internet Protocol (IP) session or connection between the client (11) and the telecommunications network (100), wherein the Internet Protocol address is obtained, by the Dynamic Host Configuration Protocol server (31), in dependence of the interface identification data included in the second message (102),
-- transmitting a third message (103), from the Dynamic Host Configuration Protocol server (31) to the router (21), wherein the third message (103) comprises the Internet Protocol address for realizing the Internet Protocol session or connection.
**characterized by**
-- checking, by the router (21), if the Internet Protocol address is allocated to a further interface (21") of the router (21), the further interface (21") being different from the interface (21') of the router (21),
-- sending, in case that the Internet Protocol address is allocated to the further interface (21") of the router (21), by the router (21), a reject message (105) with the rejected Internet Protocol address to the Dynamic Host Configuration Protocol server (31) or to a further Dynamic Host Configuration Protocol server (32, 33),
-- determining, by the Dynamic Host Configuration Protocol server (31) or the further Dynamic Host Configuration Protocol server (32, 33), using the rejected Internet Protocol address and profile data related to the user of the client (11), a new Internet Protocol address for realizing the Internet Protocol session or connection between the client (11) and the telecommunications network (100),
-- sending, by the Dynamic Host Configuration Protocol server (31) or the further Dynamic Host Configuration Protocol server (32, 33), a sixth message (106) to the router (21), wherein the sixth message (106) includes the new response Internet Protocol address,
-- checking, by the router (21), if the new response Internet Protocol address is allocated to another interface (21") of the router (21), wherein, if the new response Internet Protocol address is available, the router forwards the new Internet Protocol address to the client (11) such that the Internet Protocol session or connection is realized between the client (11) and the telecommunications network (100).

2. Method according to one of the preceding claims,
wherein Internet Protocol anycast is used for the communication between the router (21) and the Dynamic Host Configuration Protocol server (31) or a further Dynamic Host Configuration Protocol server (32) of the telecommunications network (100), wherein preferably Internet Protocol version 6 or higher anycast is used.

3. Method according to one of the preceding claims, wherein obtaining the Internet Protocol address by the Dynamic Host Configuration Protocol server (31) comprises at least one of:
-- generating the Internet Protocol address based on the interface identification data received with the second message (102), and
-- determining the Internet Protocol address from a set of Internet Protocol (IP) addresses, wherein the set of Internet Protocol addresses is a set of dedicated Internet Protocol addresses associated with the router (21).

4. Method according to one of the preceding claims, wherein the Dynamic Host Configuration Protocol server (31) comprises a profile data storage (41), the profile data storage (41) storing profile data related to a user of the client (11), wherein the profile data comprises the interface identification data, wherein the method comprises the further steps of:
-- retrieving, by the Dynamic Host Configuration Protocol server (31), the profile data from the profile data storage (41) in dependence of the interface identification data received with the second message (102),
-- generating and/or determining the Internet Protocol address, by the Dynamic Host Configuration Protocol server (31), in dependence of the profile data.

5. Method according to claim 4, wherein the Dynamic Host Configuration Protocol server (31) uses as the Internet Protocol address:
-- a static Internet Protocol address, in case that the profile data indicate a static Internet Protocol address configuration, wherein the Dynamic Host Configuration Protocol server (31) uses a static Internet Protocol address stored in the profile data or generates the static Internet Protocol address based on the interface identification data, or
-- a dynamic Internet Protocol address, in case that the profile data indicate a static Internet Protocol address configuration.

6. Method according to one of the preceding claims, wherein the Internet Protocol address is randomly obtained using a random number generator, wherein the Internet Protocol address is preferably randomly generated based on the interface identification data or randomly determined from the set of Internet Protocol addresses.

7. Telecommunications network (100) for configuring a network connection between a client (11) and the telecommunications network (100), wherein the telecommunications network (100) comprises a router (21) having an interface (21') and a Dynamic Host Configuration Protocol server (31), wherein the client (11) is connected to the telecommunications network (100) via the interface (21') of the router (21), wherein the router (21) is configured to receive a first message (101), via the interface (21') of the router (21), from the client (11),
wherein the first message (101) is related to a request for an Internet Protocol address assignment for realizing an Internet Protocol session or connection between the client (11) and the telecommunications network (100), wherein the telecommunications network (100) is configured to transmit a second message (102) from the router (21) to the Dynamic Host Configuration Protocol server (31), wherein the router (21) is configured to relay the first message (101) to the Dynamic Host Configuration Protocol server (31), wherein the second message (102) comprises interface identification data, wherein the interface identification data are related to an identification of the interface (21') of the router (21) being used for the transmission of the first message (101), wherein the interface identification data comprise at least an interface Internet Protocol address of the interface (21'), wherein the Dynamic Host Configuration Protocol server (31) is configured to obtain an Internet Protocol address for realizing the Internet Protocol session or connection between the client (11) and the telecommunications network (100), wherein the Dynamic Host Configuration Protocol server (31) is configured to obtain the Internet Protocol address in dependence of the interface identification data included in the second message (102), wherein the Dynamic Host Configuration Protocol server (31) is configured to transmit a third message (103) to the router (21), wherein the third message (103) comprises the Internet Protocol address for realizing the Internet Protocol session or connection, **characterized by** the router (21) being configured to check, if the Internet Protocol address is allocated to a further interface (21") of the router (21), the further interface (21") being different from the interface (21') of the router (21),
wherein, in case that the Internet Protocol address is allocated to the further interface (21") of the router (21), the router (21) is configured to send a reject message (105) with the rejected Internet Protocol address to the Dynamic Host Configuration Protocol server (31) or to a further Dynamic Host Configuration Protocol server (32, 33),
wherein the Dynamic Host Configuration Protocol server (31) or the further Dynamic Host Configuration Protocol server (32, 33) is configured to determine, using the rejected Internet Protocol address and profile data related to the user of the client (11), a new Internet Protocol address for realizing the Internet Protocol session or connection between the client (11) and the telecommunications network (100),
wherein, the Dynamic Host Configuration Protocol server (31) or the further Dynamic Host Configuration Protocol server (32, 33) is configured to send a sixth message (106) to the router (21), wherein the sixth message (106) includes the new response Internet Protocol address, wherein the router (21) is configured to check if the new response Internet Protocol address is allocated to another interface 21" of the router 21, wherein, if the new response Internet Protocol address is available, the router is configured to forward the new Internet Protocol address to the client (11) such that the Internet Protocol session or connection is realized between the client (11) and the telecommunications network (100)..

8. Telecommunications network (100) according to claim 7, wherein the Internet Protocol address being obtained by the Dynamic Host Configuration Protocol server (31) is a router specific Internet Protocol address, wherein the router specific Internet Protocol address is related to the router (21).

9. Telecommunications network (100) according to one of claims 7 or 8, wherein the Dynamic Host Configuration Protocol server (31) comprises a profile data storage (41), the profile data storage (41) storing profile data related to a user of the client (11), wherein the profile data comprises the interface identification data, wherein the Dynamic Host Configuration Protocol server (31) is configured to:
-- retrieve the profile data from the profile data storage (41) in dependence of the interface identification data received with the second message (102),
-- generate and/or determine the Internet Protocol address in dependence of the profile data.

10. Program comprising a computer readable program code which, when executed on a computer and/or on network nodes of a telecommunications network (100), causes the computer and/or the network nodes of the telecommunications network (100) to perform a method according to one of claims 1 to 6.

11. Computer program product for using a telecommunications network (100), the computer program product comprising a computer program stored on a storage medium, the computer program comprising program code which, when executed on a computer and/or on network nodes of a telecommunications network (100), causes the computer and/or the network nodes of the telecommunications network (100) to perform a method according to one of claims 1 to 6.

## Patentansprüche

1. Verfahren zum Konfigurieren einer Netzwerkverbindung zwischen einem Client (11) und einem Telekommunikationsnetz (100), wobei das Telekommunikationsnetz (100) einen Router (21), der eine Schnittstelle (21') aufweist, und einen Dynamic Host Configuration Protocol-Server (31) umfasst, wobei der Client (11) mit dem Telekommunikationsnetz (100) über die Schnittstelle (21') des Routers (21) verbunden ist, wobei das Verfahren die folgenden Schritte umfasst:
- Senden einer ersten Nachricht (101), über die Schnittstelle (21') des Routers (21), von dem Client (11) zu dem Router (21), wobei sich die erste Nachricht (101) auf eine Anforderung für eine Internet Protocol-Adressenzuweisung zum Realisieren einer Internet Protocol-Sitzung oder -Verbindung zwischen dem Client (11) und dem Telekommunikationsnetz (100) bezieht,
- Senden einer zweiten Nachricht (102) von dem Router (21) zu dem Dynamic Host Configuration Protocol-Server (31), wobei der Router (21) die erste Nachricht (101) an den Dynamic Host Configuration Protocol-Server (31) weiterleitet, wobei die zweite Nachricht (102) Schnittstellenidentifizierungsdaten umfasst, wobei die Schnittstellenidentifizierungsdaten zu einer Identifizierung der Schnittstelle (21') des Routers (21) in Bezug stehen, die für die Übertragung der ersten Nachricht (101) verwendet wird, wobei die Schnittstellenidentifizierungsdaten mindestens eine Schnittstellen-Internet Protocol-Adresse der Schnittstelle (21') umfassen,
- Erhalten, durch den Dynamic Host Configuration Protocol-Server (31), einer Internet Protocol-Adresse zum Realisieren der Internet Protocol (IP)-Sitzung oder -Verbindung zwischen dem Client (11) und dem Telekommunikationsnetz (100), wobei die Internet Protocol-Adresse durch den Dynamic Host Configuration Protocol-Server (31) in Abhängigkeit von den Schnittstellenidentifizierungsdaten erhalten wird, die in der zweiten Nachricht (102) enthalten sind,
- Senden einer dritten Nachricht (103) von dem Dynamic Host Configuration Protocol-Server (31) zu dem Router (21), wobei die dritte Nachricht (103) die Internet Protocol-Adresse zum Realisieren der Internet Protocol-Sitzung oder -Verbindung umfasst,
**gekennzeichnet durch**:
- Überprüfen, durch den Router (21), ob die Internet Protocol-Adresse einer weiteren Schnittstelle (21") des Routers (21) zugewiesen ist, wobei die weitere Schnittstelle (21") eine andere ist als die Schnittstelle (21') des Routers (21),
- Senden, falls die Internet Protocol-Adresse der weiteren Schnittstelle (21") des Routers (21) zugewiesen ist, durch den Router (21), einer Zurückweisungsnachricht (105) mit der zurückgewiesenen Internet Protocol-Adresse an den Dynamic Host Configuration Protocol-Server (31) oder an einen weiteren Dynamic Host Configuration Protocol-Server (32, 33),
- Bestimmen, durch den Dynamic Host Configuration Protocol-Server (31) oder das weitere Dynamic Host Configuration Protocol-Server (32, 33), unter Verwendung der zurückgewiesenen Internet Protocol-Adresse und von Profildaten, die zu dem Nutzer des Client (11) in Bezug stehen, einer neuen Internet Protocol-Adresse zum Realisieren der Internet Protocol-Sitzung oder -Verbindung zwischen dem Client (11) und dem Telekommunikationsnetz (100),
- Senden, durch den Dynamic Host Configuration Protocol-Server (31) oder den weiteren Dynamic Host Configuration Protocol-Server (32, 33), einer sechsten Nachricht (106) an den Router (21), wobei die sechste Nachricht (106) die neue Antwort-Internet Protocol-Adresse enthält,
- Überprüfen, durch den Router (21), ob die neue Antwort-Internet Protocol-Adresse einer anderen Schnittstelle (21") des Routers (21) zugewiesen ist, wobei, wenn die neue Antwort-Internet Protocol-Adresse verfügbar ist, der Router die neue Internet Protocol-Adresse an den Client (11) weiterleitet, dergestalt, dass die Internet Protocol-Sitzung oder -Verbindung zwischen dem Client (11) und dem Telekommunikationsnetz (100) realisiert wird.

2. Verfahren nach einem der vorangehenden Ansprüche,
wobei Internet Protocol-Anycast für die Kommunikation zwischen dem Router (21) und dem Dynamic Host Configuration Protocol-Server (31) oder einem weiteren Dynamic Host Configuration Protocol-Server (32) des Telekommunikationsnetzes (100) verwendet wird, wobei bevorzugt Internet Protocol-Anycast Version 6 oder höher verwendet wird.

3. Verfahren nach einem der vorangehenden Ansprüche, wobei das Erhalten der Internet Protocol-Adresse durch den Dynamic Host Configuration Protocol-Server (31) mindestens eines von Folgendem umfasst:
- Generieren der Internet Protocol-Adresse auf der Basis der Schnittstellenidentifizierungsdaten, die mit der zweiten Nachricht (102) empfangen wurden, und
- Bestimmen der Internet Protocol-Adresse eines Satzes Internet Protocol (IP)-Adressen, wobei der Satz Internet Protocol-Adressen ein Satz dedizierter Internet Protocol-Adressen ist, die mit dem Router (21) verknüpft sind.

4. Verfahren nach einem der vorangehenden Ansprüche, wobei der Dynamic Host Configuration Protocol-Server (31) einen Profildatenspeicher (41) umfasst, wobei der Profildatenspeicher (41) Profildaten speichert, die sich auf einen Nutzer des Client (11) beziehen, wobei die Profildaten die Schnittstellenidentifizierungsdaten umfassen, wobei das Verfahren des Weiteren folgende Schritte umfasst:
- Abrufen, durch den Dynamic Host Configuration Protocol-Server (31), der Profildaten aus dem Profildatenspeicher (41) in Abhängigkeit von den Schnittstellenidentifizierungsdaten, die mit der zweiten Nachricht (102) empfangen wurden,
- Generieren und/oder Bestimmen der Internet Protocol-Adresse, durch den Dynamic Host Configuration Protocol-Server (31), in Abhängigkeit von den Profildaten.

5. Verfahren nach Anspruch 4, wobei der Dynamic Host Configuration Protocol-Server (31) als die Internet Protocol-Adresse verwendet:
- eine statische Internet Protocol-Adresse, falls die Profildaten eine statische Internet Protocol-Adressen-Konfiguration anzeigen, wobei der Dynamic Host Configuration Protocol-Server (31) eine statische Internet Protocol-Adresse verwendet, die in den Profildaten gespeichert sind, oder die statische Internet Protocol-Adresse auf der Basis der Schnittstellenidentifizierungsdaten generiert, oder
- eine dynamische Internet Protocol-Adresse, falls die Profildaten eine statische Internet Protocol-Adressen-Konfiguration anzeigen.

6. Verfahren nach einem der vorangehenden Ansprüche, wobei die Internet Protocol-Adresse nach dem Zufallsprinzip unter Verwendung eines Zufallszahlengenerators erhalten wird, wobei die Internet Protocol-Adresse bevorzugt nach dem Zufallsprinzip auf der Basis der Schnittstellenidentifizierungsdaten generiert wird oder nach dem Zufallsprinzip anhand des Satzes von Internet Protocol-Adressen bestimmt wird.

7. Telekommunikationsnetz (100) zum Konfigurieren einer Netzwerkverbindung zwischen einem Client (11) und dem Telekommunikationsnetz (100), wobei das Telekommunikationsnetz (100) einen Router (21), der eine Schnittstelle (21') aufweist, und einen Dynamic Host Configuration Protocol-Server (31) umfasst, wobei der Client (11) mit dem Telekommunikationsnetz (100) über die Schnittstelle (21') des Routers (21) verbunden ist, wobei der Router (21) dafür konfiguriert ist, eine erste Nachricht (101) über die Schnittstelle (21') des Routers (21) von dem Client (11) zu empfangen, wobei sich die erste Nachricht (101) auf eine Anforderung für eine Internet Protocol-Adressenzuweisung zum Realisieren einer Internet Protocol-Sitzung oder -Verbindung zwischen dem Client (11) und dem Telekommunikationsnetz (100) bezieht, wobei das Telekommunikationsnetz (100) dafür konfiguriert ist, eine zweite Nachricht (102) von dem Router (21) an den Dynamic Host Configuration Protocol-Server (31) zu senden, wobei der Router (21) dafür konfiguriert ist, die erste Nachricht (101) an den Dynamic Host Configuration Protocol-Server (31) weiterzuleiten, wobei die zweite Nachricht (102) Schnittstellenidentifizierungsdaten umfasst, wobei die Schnittstellenidentifizierungsdaten in Bezug zu einer Identifizierung der Schnittstelle (21') des Routers (21) stehen, die für die Übertragung der ersten Nachricht (101) verwendet wird, wobei die Schnittstellenidentifizierungsdaten mindestens eine Schnittstellen-Internet Protocol-Adresse der Schnittstelle (21') umfassen, wobei der Dynamic Host Configuration Protocol-Server (31) dafür konfiguriert ist, eine Internet Protocol-Adresse zum Realisieren der Internet Protocol-Sitzung oder -Verbindung zwischen dem Client (11) und dem Telekommunikationsnetz (100) zu erhalten, wobei der Dynamic Host Configuration Protocol-Server (31) dafür konfiguriert ist, die Internet Protocol-Adresse in Abhängigkeit von den Schnittstellenidentifizierungsdaten zu erhalten, die in der zweiten Nachricht (102) enthalten sind, wobei der Dynamic Host Configuration Protocol-Server (31) dafür konfiguriert ist, eine dritte Nachricht (103) an den Router (21) zu senden, wobei die dritte Nachricht (103) die Internet Protocol-Adresse zum Realisieren der Internet Protocol-Sitzung oder -Verbindung umfasst,
**dadurch gekennzeichnet, dass**
der Router (21) dafür konfiguriert ist zu überprüfen, ob die Internet Protocol-Adresse einer weiteren Schnittstelle (21") des Routers (21) zugewiesen ist, wobei die weitere Schnittstelle (21") eine andere ist als die Schnittstelle (21') des Routers (21),
wobei, falls die Internet Protocol-Adresse der weiteren Schnittstelle (21") des Routers (21) zugewiesen ist, der Router (21) dafür konfiguriert ist, eine Zurückweisungsnachricht (105) mit der zurückgewiesenen Internet Protocol-Adresse an den Dynamic Host Configuration Protocol-Server (31) oder an einen weiteren Dynamic Host Configuration Protocol-Server (32, 33) zu senden,
wobei der Dynamic Host Configuration Protocol-Server (31) oder der weitere Dynamic Host Configuration Protocol-Server (32, 33) dafür konfiguriert ist, unter Verwendung der zurückgewiesenen Internet Protocol-Adresse und von Profildaten, die zu dem Nutzer des Client (11) in Bezug stehen, eine neue Internet Protocol-Adresse zum Realisieren der Internet Protocol-Sitzung oder -Verbindung zwischen dem Client (11) und dem Telekommunikationsnetz (100) zu bestimmen,
wobei der Dynamic Host Configuration Protocol-Server (31) oder der weiterer Dynamic Host Configuration Protocol-Server (32, 33) dafür konfiguriert ist, eine sechste Nachricht (106) an den Router (21) zu senden, wobei die sechste Nachricht (106) die neue Antwort-Internet Protocol-Adresse enthält,
wobei der Router (21) dafür konfiguriert ist zu überprüfen, ob die neue Antwort-Internet Protocol-Adresse einer anderen Schnittstelle (21") des Routers 21 zugewiesen ist,
wobei, wenn die neue Antwort-Internet Protocol-Adresse verfügbar ist, der Router dafür konfiguriert ist, die neue Internet Protocol-Adresse an den Client (11) weiterzuleiten, dergestalt, dass die Internet Protocol-Sitzung oder - Verbindung zwischen dem Client (11) und dem Telekommunikationsnetz (100) realisiert wird.

8. Telekommunikationsnetz (100) nach Anspruch 7, wobei die Internet Protocol-Adresse, die durch den Dynamic Host Configuration Protocol-Server (31) erhalten wird, eine Router-spezifische Internet Protocol-Adresse ist, wobei die Router-spezifische Internet Protocol-Adresse zu dem Router (21) in Bezug steht.

9. Telekommunikationsnetz (100) nach einem der Ansprüche 7 und 8, wobei der Dynamic Host Configuration Protocol-Server (31) einen Profildatenspeicher (41) umfasst, wobei der Profildatenspeicher (41) Profildaten speichert, die sich auf einen Nutzer des Client (11) beziehen, wobei die Profildaten die Schnittstellenidentifizierungsdaten umfassen, wobei der Dynamic Host Configuration Protocol-Server (31) für Folgendes konfiguriert ist:
- Abrufen der Profildaten aus dem Profildatenspeicher (41) in Abhängigkeit von den Schnittstellenidentifizierungsdaten, die mit der zweiten Nachricht (102) empfangen wurden,
- Generieren und/oder Bestimmen der Internet Protocol-Adresse in Abhängigkeit von den Profildaten.

10. Programm, das einen computerlesbaren Programm-Code umfasst, der, wenn er auf einem Computer und/oder in einem Netzknoten eines Telekommunikationsnetzes (100) ausgeführt wird, den Computer und/oder den Netzknoten des Telekommunikationsnetzes (100) veranlasst, ein Verfahren nach einem der Ansprüche 1 bis 6 auszuführen.

11. Computerprogrammprodukt zur Verwendung eines Telekommunikationsnetzes (100), wobei das Computerprogrammprodukt ein Computerprogramm umfasst, das auf einem Speichermedium gespeichert ist, wobei das Computerprogramm Programm-Code umfasst, der, wenn er auf einem Computer und/oder in einem Netzknoten eines Telekommunikationsnetzes (100) ausgeführt wird, den Computer und/oder den Netzknoten des Telekommunikationsnetzes (100) veranlasst, ein Verfahren nach einem der Ansprüche 1 bis 6 auszuführen.

## Revendications

1. Procédé de configuration d'une connexion réseau entre un client (11) et un réseau de télécommunications (100), dans lequel le réseau de télécommunications (100) comprend un routeur (21) ayant une interface (21') et un serveur de protocole de configuration dynamique des hôtes (31), dans lequel le client (11) est connecté au réseau de télécommunications (100) via l'interface (21') du routeur (21), dans lequel le procédé comprend les étapes de :
- transmettre un premier message (101), via l'interface (21') du routeur (21), du client (11) au routeur (21), dans lequel le premier message (101) est lié à une demande d'attribution d'adresse de protocole Internet pour réaliser une session ou une connexion de protocole Internet entre le client (11) et le réseau de télécommunications (100),
- transmettre un deuxième message (102) du routeur (21) au serveur de protocole de configuration dynamique des hôtes (31), dans lequel le routeur (21) relaye le premier message (101) au serveur de protocole de configuration dynamique des hôtes (31), dans lequel le deuxième message (102) comprend des données d'identification d'interface, dans lequel les données d'identification d'interface sont liées à une identification de l'interface (21') du routeur (21) utilisée pour la transmission du premier message (101), dans lequel les données d'identification d'interface comprennent au moins une adresse de protocole Internet d'interface de l'interface (21'),
- obtenir, par le serveur de protocole de configuration dynamique des hôtes (31), une adresse de protocole Internet pour réaliser la session ou la connexion de protocole Internet (IP) entre le client (11) et le réseau de télécommunications (100), dans lequel l'adresse de protocole Internet est obtenue, par le serveur de protocole de configuration dynamique des hôtes (31), en fonction des données d'identification d'interface incluses dans le deuxième message (102),
- transmettre un troisième message (103), du serveur de protocole de configuration dynamique des hôtes (31) au routeur (21), dans lequel le troisième message (103) comprend l'adresse de protocole Internet pour réaliser la session ou la connexion de protocole Internet,
**caractérisé par**
- vérifier, par le routeur (21), si l'adresse de protocole Internet est allouée à une interface supplémentaire (21") du routeur (21), l'interface supplémentaire (21") étant différente de l'interface (21') du routeur (21),
- envoyer, dans le cas où l'adresse de protocole Internet est allouée à l'interface supplémentaire (21") du routeur (21), par le routeur (21), un message de refus (105) avec l'adresse de protocole Internet refusée au serveur de protocole de configuration dynamique des hôtes (31) ou à un serveur de protocole de configuration dynamique des hôtes supplémentaire (32, 33),
- déterminer, par le serveur de protocole de configuration dynamique des hôtes (31) ou le serveur de protocole de configuration dynamique des hôtes supplémentaire (32, 33), à l'aide de l'adresse de protocole Internet refusée et de données de profil liées à l'utilisateur du client (11), une nouvelle adresse de protocole Internet pour réaliser la session ou la connexion de protocole Internet entre le client (11) et le réseau de télécommunications (100),
- envoyer, par le serveur de protocole de configuration dynamique des hôtes (31) ou le protocole de configuration dynamique des hôtes supplémentaire (32, 33), un sixième message (106) au routeur (21), dans lequel le sixième message (106) comporte la nouvelle adresse de protocole Internet de réponse,
- vérifier, par le routeur (21), si la nouvelle adresse de protocole Internet de réponse est allouée à une autre interface (21") du routeur (21), dans lequel, si la nouvelle adresse de protocole Internet de réponse est disponible, le routeur réachemine la nouvelle adresse de protocole Internet au client (11) de sorte que la session ou la connexion de protocole Internet soit réalisée entre le client (11) et le réseau de télécommunications (100).

2. Procédé selon l'une des revendications précédentes, dans lequel un envoi à la cantonade de protocole Internet est utilisé pour la communication entre le routeur (21) et le serveur de protocole de configuration dynamique des hôtes (31) ou un serveur de protocole de configuration dynamique des hôtes supplémentaire (32) du réseau de télécommunications (100), dans lequel de préférence un envoi à la cantonade d'un protocole Internet version 6 ou supérieure est utilisé.

3. Procédé selon l'une des revendications précédentes, dans lequel l'obtention de l'adresse de protocole Internet par le serveur de protocole de configuration dynamique des hôtes (31) comprend au moins l'une parmi :
- la génération de l'adresse de protocole Internet d'après les données d'identification d'interface reçues avec le deuxième message (102), et
- la détermination de l'adresse de protocole Internet à partir d'un ensemble d'adresses de protocole Internet (IP), dans lequel l'ensemble d'adresses de protocole Internet est un ensemble d'adresses de protocole Internet dédiées associées au routeur (21).

4. Procédé selon l'une des revendications précédentes, dans lequel le serveur de protocole de configuration dynamique des hôtes (31) comprend un stockage de données de profil (41), le stockage de données de profil (41) stockant des données de profil liées à un utilisateur du client (11), dans lequel les données de profil comprennent les données d'identification d'interface, dans lequel le procédé comprend les étapes supplémentaires de :
- récupérer, par le serveur de protocole de configuration dynamique des hôtes (31), les données de profil à partir du stockage de données de profil (41) en fonction des données d'identification d'interface reçues avec le deuxième message (102),
- générer et/ou déterminer l'adresse de protocole Internet, par le serveur de protocole de configuration dynamique des hôtes (31), en fonction des données de profil.

5. Procédé selon la revendication 4, dans lequel le serveur de protocole de configuration dynamique des hôtes (31) utilise en tant qu'adresse de protocole Internet :
- une adresse de protocole Internet statique, dans le cas où les données de profil indiquent une configuration d'adresse de protocole Internet statique, dans lequel le serveur de protocole de configuration dynamique des hôtes (31) utilise une adresse de protocole Internet statique stockée dans les données de profil ou génère l'adresse de protocole Internet statique d'après les données d'identification d'interface, ou
- une adresse de protocole Internet dynamique, dans le cas où les données de profil indiquent une configuration d'adresse de protocole Internet statique.

6. Procédé selon l'une des revendications précédentes, dans lequel l'adresse de protocole Internet est obtenue aléatoirement à l'aide d'un générateur de nombres aléatoires, dans lequel l'adresse de protocole Internet est générée de préférence aléatoirement d'après les données d'identification d'interface ou déterminée aléatoirement à partir de l'ensemble d'adresses de protocole Internet.

7. Réseau de télécommunications (100) pour configurer une connexion réseau entre un client (11) et le réseau de télécommunications (100), dans lequel le réseau de télécommunications (100) comprend un routeur (21) ayant une interface (21') et un serveur de protocole de configuration dynamique des hôtes (31), dans lequel le client (11) est connecté au réseau de télécommunications (100) via l'interface (21') du routeur (21), dans lequel le routeur (21) est configuré pour recevoir un premier message (101), via l'interface (21') du routeur (21), en provenance du client (11), dans lequel le premier message (101) est lié à une demande d'attribution d'adresse de protocole Internet pour réaliser une session ou une connexion de protocole Internet entre le client (11) et le réseau de télécommunications (100), dans lequel le réseau de télécommunications (100) est configuré pour transmettre un deuxième message (102) du routeur (21) au serveur de protocole de configuration dynamique des hôtes (31), dans lequel le routeur (21) est configuré pour relayer le premier message (101) au serveur de protocole de configuration dynamique des hôtes (31), dans lequel le deuxième message (102) comprend des données d'identification d'interface, dans lequel les données d'identification d'interface sont liées à une identification de l'interface (21') du routeur (21) utilisée pour la transmission du premier message (101), dans lequel les données d'identification d'interface comprennent au moins une adresse de protocole Internet d'interface de l'interface (21'), dans lequel le serveur de protocole de configuration dynamique des hôtes (31) est configuré pour obtenir une adresse de protocole Internet pour réaliser la session ou la connexion de protocole Internet entre le client (11) et le réseau de télécommunications (100), dans lequel le serveur de protocole de configuration dynamique des hôtes (31) est configuré pour obtenir l'adresse de protocole Internet en fonction des données d'identification d'interface incluses dans le deuxième message (102), dans lequel le serveur de protocole de configuration dynamique des hôtes (31) est configuré pour transmettre un troisième message (103) au routeur (21), dans lequel le troisième message (103) comprend l'adresse de protocole Internet pour réaliser la session ou la connexion de protocole Internet, **caractérisé en ce que** le routeur (21) est configuré pour vérifier, si l'adresse de protocole Internet est allouée à une interface supplémentaire (21") du routeur (21), l'interface supplémentaire (21") étant différente de l'interface (21') du routeur (21),
dans lequel, dans le cas où l'adresse de protocole Internet est allouée à l'interface supplémentaire (21") du routeur (21), le routeur (21) est configuré pour envoyer un message de refus (105) avec l'adresse de protocole Internet refusée au serveur de protocole de configuration dynamique des hôtes (31) ou à un serveur de protocole de configuration dynamique des hôtes supplémentaire (32, 33),
dans lequel le serveur de protocole de configuration dynamique des hôtes (31) ou le protocole de configuration dynamique des hôtes supplémentaire (32, 33) est configuré pour déterminer, à l'aide de l'adresse de protocole Internet refusée et de données de profil liées à l'utilisateur du client (11), une nouvelle adresse de protocole Internet pour réaliser la session ou la connexion de protocole Internet entre le client (11) et le réseau de télécommunications (100),
dans lequel, le serveur de protocole de configuration dynamique des hôtes (31) ou le protocole de configuration dynamique des hôtes supplémentaire (32, 33) est configuré pour envoyer un sixième message (106) au routeur (21), dans lequel le sixième message (106) comporte la nouvelle adresse de protocole Internet de réponse, dans lequel le routeur (21) est configuré pour vérifier si la nouvelle adresse de protocole Internet de réponse est allouée à une autre interface (21") du routeur (21), dans lequel, si la nouvelle adresse de protocole Internet de réponse est disponible, le routeur est configuré pour réacheminer la nouvelle adresse de protocole Internet au client (11) de sorte que la session ou la connexion de protocole Internet soit réalisée entre le client (11) et le réseau de télécommunications (100).

8. Réseau de télécommunications (100) selon la revendication 7, dans lequel l'adresse de protocole Internet obtenue par le serveur de protocole de configuration dynamique des hôtes (31) est une adresse de protocole Internet spécifique au routeur, dans lequel l'adresse de protocole Internet spécifique au routeur est liée au routeur (21).

9. Réseau de télécommunications (100) selon l'une des revendications 7 ou 8, dans lequel le serveur de protocole de configuration dynamique des hôtes (31) comprend un stockage de données de profil (41), le stockage de données de profil (41) stockant des données de profil liées à un utilisateur du client (11), dans lequel les données de profil comprennent les données d'identification d'interface, dans lequel le serveur de protocole de configuration dynamique des hôtes (31) est configuré pour :
- récupérer les données de profil à partir du stockage de données de profil (41) en fonction des données d'identification d'interface reçues avec le deuxième message (102),
- générer et/ou déterminer l'adresse de protocole Internet en fonction des données de profil.

10. Programme comprenant un code de programme lisible par ordinateur qui, lorsqu'il est exécuté sur un ordinateur et/ou sur des noeuds de réseau d'un réseau de télécommunications (100), amène l'ordinateur et/ou les noeuds de réseau du réseau de télécommunications (100) à effectuer un procédé selon l'une des revendications 1 à 6.

11. Produit de programme d'ordinateur pour utiliser un réseau de télécommunications (100), le produit de programme d'ordinateur comprenant un programme d'ordinateur stocké sur un moyen de stockage, le programme d'ordinateur comprenant un code de programme qui, lorsqu'il est exécuté sur un ordinateur et/ou sur des noeuds de réseau d'un réseau de télécommunications (100), amène l'ordinateur et/ou les noeuds de réseau du réseau de télécommunications (100) à effectuer un procédé selon l'une des revendications 1 à 6.
